# EUROPÄISCHE PATENTSCHRIFT

(11) **EP 2 649 876 B1**
(45) Veröffentlichungstag und Bekanntmachung des Hinweises auf die Patenterteilung: **06.05.2020**
(21) Anmeldenummer: 13163037.8
(22) Anmeldetag: 10.04.2013
(51) Int. Cl.: A01K 5/02, A01K 13/00

(54) **Vorrichtung zur Abgabe von Feststoffen und Flüssigkeiten an Tiere**
Device for dispensing solids and liquids to animals
Dispositif de distribution de solides et de liquides à des animaux

(30) Priorität: 10.04.2012 DE 102012205803
(43) Veröffentlichungstag der Anmeldung: 16.10.2013
(73) Patentinhaber: Gnadl, Birgit, 83236 Übersee (DE)
(72) Erfinder: Gnadl, Birgit, 83236 Übersee (DE)
(74) Vertreter: Manitz Finsterwald Patent- und Rechtsanwaltspartnerschaft mbB

(56) Entgegenhaltungen:
- EP-A2- 1 300 075
- WO-A2-2004/066705

## Beschreibung

Die Erfindung betrifft eine Vorrichtung mit einer Kraftfutterstation zur Abgabe von Kraftfutter an Tiere mit einer das jeweilige Tier erkennenden Sensoreinrichtung, die über eine Steuervorrichtung die Kraftfutterabgabe tierspezifisch steuert.

Vorrichtungen der oben genannten Art sind in verschiedenen Ausführungen bekannt. In einem modernen Kuhstall ist es üblich, dass die Kühe sich nicht an festgelegten Plätzen aufhalten müssen, sondern sie haben sozusagen freie Platzwahl und können sich im Kuhstall frei bewegen und selbst Liegeplätze oder Stehflächen auswählen. Ferner wird nicht für jedes Tier eine eigene Futtermöglichkeit vorgesehen, sondern es wird eine einzige oder höchstens einige wenige Kraftfutterabgabestationen vorgesehen, die die Kühe, je nach Bedarf an Futter, von ihnen zu selbst bestimmten Zeiten aufsuchen. Dabei ist die Futterabgabestation ausgelegt, um das jeweilige Tier zu erkennen und tierspezifisch die entsprechende Futtermenge abzugeben. Es wird dafür gesorgt, dass die Tiere nur einzeln Futter bekommen, so dass manchmal Schlangen vor der Abgabestation gebildet werden.

Es ist auch bekannt, eine Melkstation oder einige wenige Melkstationen vorzusehen, die ebenfalls von den Tieren einzeln und zu vom Tier selbst bestimmten Zeiten besucht werden. In einer Weiterbildung dieses Konzepts ist eine Futterabgabeeinrichtung mit der Melkstation kombiniert.

Auch hier erfolgt eine automatische Erkennung der jeweiligen Kuh, um beispielsweise die Milchleistung jeder Kuh automatisch zu erfassen. Anstelle einer stationär angeordneten Melkstation sind auch sogenannte sich bewegende Melkroboter (bewegliche Melkstationen) bekannt, die von Tier zu Tier sich bewegen, wie auch solche Melkroboter mit integrierter Futterabgabeeinrichtung.

Ferner sind Kuhställe bekannt, in denen sich eine sich bewegende Futterstation befindet, die sich von einer Kuh bzw. von einem Stehplatz zur bzw. zum Nächsten bewegt. Auch hier werden die Tiere einzeln erkannt und einzeln tierspezifisch gefuttert.

Die EP 1 300 075 A2 offenbart eine Vorrichtung mit einer Kraftfutterstation. Weiterer Stand der Technik wird in der Druckschrift WO 2004/066705 A2 offengelegt.

Die Aufgabe der vorliegenden Erfindung ist es, eine Weiterbildung des Konzepts einer tierspezifischen Futter- und/oder Melkstation vorzusehen, und zwar egal, ob die Futterstation stationär oder beweglich angeordnet ist, wobei die Weiterbildung eine weitergehende Funktion kostengünstig ermöglichen soll.

Diese Aufgabe wird durch eine Vorrichtung gemäß Anspruch 1 gelöst.

Insbesondere wird diese Aufgabe erfindungsgemäß dadurch gelöst, dass eine Vorrichtung der eingangs genannten Art mit einer Düseneinrichtung derart weitergebildet wird, dass die Düseneinrichtung über Leitungsmittel an Vorratsbehälter angeschlossen oder anschließbar ist, wobei die Düseneinrichtung zur Abgabe von verschiedenen flüssigen Behandlungsmitteln vorgesehen ist, die in den jeweiligen Vorratsbehältern enthalten sind, dass eine Steuerung vorgesehen ist, mit der die Sensoreinrichtung oder die Steuervorrichtung kommuniziert, um die Abgabe des jeweiligen Behandlungsmittels tierspezifisch vorzunehmen, und
dass die Düseneinrichtung dazu ausgebildet ist, das jeweilige Behandlungsmittel auf Nase, Maul und Nase und/oder auf einen Schleimhautbereich des Tieres aufzubringen und/oder zu Verteilen.

Erfindungsgemäß wird somit eine Düseneinrichtung vorgesehen, die über Leitungsmittel an Vorratsbehälter angeschlossen oder anschließbar ist, wodurch verschiedene flüssige Behandlungsmittel, die in dem jeweiligen Vorratsbehälter enthalten sind, tierspezifisch an das jeweilige sich in der Futterstation und/oder der Melkstation befindliche Tier abgegeben werden.

Somit kann Tieren einfach mittels einer Düseneinrichtung an einer Kraftfutterstation bzw.an einer Melkstation auf einfache und kostengünstige Weise sowie weitestgehend ohne die Gefahr von Verwechselungen der Zuordnung des Behandlungsmittels für einzelne Tieren Behandlungsmittel verabreicht werden.

Das erfindungsgemäße Konzept nützt somit bereits bekannte Vorrichtungen konsequent weiter aus, um Tiere jeweils einzeln zu behandeln. Ferner fügt sich die Erfindung gut in die moderne Tierhaltung ein, bei der anstatt der vorsorglichen massenhaften Versorgung von Tieren mit Antibiotika nur diejenigen Tiere, die eine Behandlung brauchen, tatsächlich behandelt werden, wobei die Behandlung nicht unbedingt mit Antibiotika erfolgen muss, sondern heutzutage häufig mit homöopathischen Mitteln erfolgt.

Viele Landwirte haben sich heutzutage selbst für die Behandlung von Tieren mit homöopathischen Mitteln ausbilden lassen, da eine solche Behandlung weitaus kostengünstiger ist als die Behandlung mit Antibiotika und die Milch von solchen mit homöopathischen Mitteln behandelten Tieren frei von Rückständen ist und keine Wartezeit für das "in Verkehrbringen" besteht.

Praktisch wird die Erfindung wie folgt gehandhabt. Es werden in landwirtschaftlichen Tierbetrieben, wie z.B. in der Rinder- bzw. Schweinehaltung, die einzelnen Tiere in der Regel von einem Tierarzt oder von einem Naturtierheilpraktiker oder vom Landwirt selbst untersucht, um zu identifizieren, welche der Tiere mit tierspezifischen Behandlungsmitteln versorgt werden müssen. Nach erfolgter Untersuchung und Diagnose erhält oder erstellt der Landwirt für jedes seiner untersuchten Tiere einen tierspezifischen Behandlungsplan, der tierspezifisch das jeweilige Behandlungsmittel, die jeweils zu verabreichende Menge und die Häufigkeit der Abgabe, zum Beispiel im Einklang mit der Futterabgabe und/oder des Melkens festlegt. Dabei kann dieser Plan bereits in einer Datenbank je nach Indikation festgelegt sein und muss dann lediglich tierspezifisch abgerufen und in der Steuerung der Düseneinrichtung berücksichtigt werden.

Um die Behandlungsmittel an die einzelnen Tiere zu verabreichen, müssen bisher die Landwirte die Tiere einfangen, um dann je nach Tier die gewünschten Behandlungsmittel anzuwenden. Dies ist zum einen sehr zeitaufwändig für den Landwirt, da er jedes Tier einzeln aufsuchen muss, und zum anderen auch sehr umständlich, da der Landwirt die für jedes Tier benötigten Behandlungsmittel bei sich führen muss. Auch sind die Tiere beim Fixieren nicht unerheblichen Stressfaktoren ausgesetzt. Der Landwirt muss zusätzlich auch Informationen über jedes Tier bei sich führen, um zu bestimmen, welches Tier nun welche(s) Behandlungsmittel in welcher Dosierung verabreicht bekommen soll.

Die vorliegende Erfindung schafft somit eine vereinfachte Möglichkeit, eine tierspezifische und tierschonende Behandlung beschleunigt durchzuführen, weitestgehend ohne Verwechselungen befürchten zu müssen.

Der Landwirt, Tierarzt oder Naturheilpraktiker hat somit keinen Aufwand mehr, die Tiere einzeln einzufängen und mit Behandlungsmitteln zu versorgen. In mittelgroßen landwirtschaftlichen Betrieben sind typischerweise 100 bis 200 Rinder anzutreffen, so dass dies auch eine erhebliche Zeitersparnis mit sich bringt und die Versorgung erheblich vereinfacht, da nicht mehr alle Behandlungsmittel mitgeführt werden müssen, sondern einfach automatisch an einer zentralen Stelle abgegeben werden können. Des Weiteren kann die Datenbank automatisch abspeichern, welches Tier wann und wie gefüttert bzw. behandelt wurde, so dass kein Tier unnötig mit Behandlungsmitteln in Kontakt kommt.

Die Tatsache, dass einzelne Tiere z.B. mit Transpondern oder Kennzeichnungen versehen sind, bedeutet, dass ein Tierarzt bzw. ein Tierheilpraktiker oder der Landwirt einen Behandlungsplan mit mindestens einem oder mehreren Behandlungsmittel(n), das bzw. die aus einer Vielzahl von verschiedenen Behandlungsmittel ist bzw. sind, für das jeweilige Tier festlegen und tierspezifisch, z.B. in einer Datenbank, festhalten kann. Die Datenbank wird auch Informationen über das bzw. die jeweilige(n) tierspezifische(n) Erkennungsmerkmal(e) beinhalten oder eine Zuordnung zu solchen in einer anderen Datenbank abgespeicherten Erkennungsmerkmalen ermöglichen. Da die bekannten Kraftfutterstationen bzw. Melkautomaten bereits ausgelegt sind, um mittels dieser Erkennungsmerkmale einzelne Tiere zu erkennen, um diesen dann tierspezifisch Kraftfutter zu verabreichen bzw. die abgegebene Milchmenge tierspezifisch zu registrieren, sind die zusätzliche Einrichtungen bzw. Software, die erforderlich sind, um die Erfindung zu realisieren, nicht sehr aufwendig zu realisieren.

Besonders günstig ist es, dass der Landwirt, der Tierarzt oder der Tierheilpraktiker nach Feststellung eines Leidens eines Tiers, lediglich seine Diagnose tierspezifisch in die Steuerung eingeben muss und die Steuerung selbst im Stande ist, das jeweilige Behandlungsmittel und Menge bzw. den jeweiligen Zeitplan ausgespeicherten Daten auszuwählen, und anschließend im Einklang mit dem Zeitplan zu verabreichen. Hierdurch beschränkt sich die Arbeit des Landwirts bzw. des Tierarztes auf das eingeben einer Diagnose und fehlerhafte Verknüpfungen mit den Behandlungsmitteln können weitestgehend ausgeschlossen werden. Die erforderlichen Medikamente werden durch eine individuell steuerbare Software einzeln ausgewählt und von dem jeweiligen Vorratsbehälter über die Düseneinrichtung dosiert an das jeweilige Tier abgegeben. Es können auch mehrere verschiedene Medikamente gleichzeitig über die Softwaresteuerung ausgewählt werden, so dass Tieren (Rinder, Schweine, Schafe und Geflügel etc.), die mit mehreren verschiedenen Behandlungsmitteln behandelt werden müssen, auch in einer Sitzung mehrere Behandlungsmittel gegeben werden können.

Es können vorhandene Kraftfutterstationen mit einer erfindungsgemäßen Düseneinrichtung nachgerüstet werden oder bei Installation einer neuen Kraftfutterstation diese gleichzeitig mit einer Düseneinrichtung installiert werden. Somit kann der Landwirt Tiere fehlerfrei und ohne viel Aufwand behandeln.

Die vorliegende Erfindung verwendet nun z.B. die schon vorhandene Möglichkeit der Tiererkennung, um die Tiere zusätzlich mit einem oder mehreren Behandlungsmitteln zu versorgen, d.h. wenn ein Tier sich einer Kraftfutterstelle oder ein Melkautomat nähert, wird dies mittels der Erkennungsmerkmale erkannt und das/die Behandlungsmittel wird/werden den Tieren dann über ihre Nasen vor allem durch aufsprühen auf die äußere Schleimhaut der Nase verabreicht. Es ist lediglich erforderlich in die entsprechende Station so auszulegen, dass die Tiere stets eine günstige Ausrichtung für die Abgabe des Behandlungsmittels haben.

Nachdem die Steuerung die jeweiligen Tiere automatisch erkannt und eine Zuordnung zu der erforderlichen Behandlung vorgenommen hat, wird mittels der Steuerung Behandlungsmittel aus einem Vorrat an die Düseneinrichtung weitergeleitet und an das jeweilige Tier automatisch abgegeben.

Durch die Wahl der konkreten Auslegung der Düseneinrichtung kann die erforderliche Verabreichung des Behandlungsmittels erfolgen.

Somit ermöglicht eine Sprühdüse das Aufbringen bzw. Verteilen der/des Behandlungsmittel(s) über die Nase, insbesondere auf die äußere Schleimhaut der Nase des Tieres. Das Konzept einer Düseneinrichtung, wie hier angewandt, umfasst nicht nur die Verwendung einer einzigen Düse oder mehrere Düsen sondern auch die Anwendung einer oder mehreren Düsen, die lediglich Tropfen eines Behandlungsmittels abgeben. Solch eine Düseneinrichtung kann ein automatisches Sprühsystem umfassen und sprüht Tieren automatisch, je nach Bedarf, allopathische Medikamente, homöopathische Medikamente, phytotherapeutische Medikamente, effektive Mikroorganismen, Nahrungsergänzungsmittel oder Impfungen auf z.B. den Nasenspiegel, das Flotzmaul, den Schnabel. Die Erfindung verwendet die Tatsache, dass Tiere generell von einer Kraftfutterstation angelockt werden, da das dort abgegebene Futter ein für die Tiere interessanteres Futter darstellt, als z.B. Silage, Heu oder Gras bei Rindern, so dass ein Landwirt relativ sicher sein kann, dass jedes Tier periodisch mit Behandlungsmitteln versorgt wird.

Erfindungsgemäß umfasst die Düseneinrichtung mindestens eine Düse, die von einer Pumpe oder von mehreren Pumpen mit den jeweiligen Behandlungsmitteln speisbar ist. Des Weiteren kann auch eine Spüleinrichtung vorgesehen sein, um die mindestens eine Düse und die sich zwischen der jeweiligen Pumpe und der Düse erstreckende Leitung nach einer Behandlungsmittelabgabe zu reinigen bzw. mit Wasser oder ein anderes Mittel zu spülen.

Dadurch, dass eine Spüleinrichtung vorgesehen ist, kann die mindestens eine Düse der Düseneinrichtung nach einer Behandlungsmittelabgabe gereinigt werden, d.h. im Bedarfsfall auch nach jeder Behandlungsmittelabgabe, so dass unterschiedliche Tiere nicht mit Behandlungsmitteln behandelt werden, die nicht für sie bestimmt sind und auch um eine Reinigung der Vorrichtung durchführen zu können, so dass die Leitungen nicht unnötig durch z.B. Mikroorganismen verschmutzt werden.

In einer bevorzugten Ausführungsform besteht die Düseneinrichtung der Vorrichtung aus mehreren Düsen, die jeweils über eine Leitung und eine Pumpe an einen jeweiligen Behandlungsmittelvorratsbehälter angeschlossen bzw. anschließbar sind.

Dadurch, dass mehrere Düsen vorhanden sind, die jeweils über eine Leitung an einen jeweiligen Flüssigkeitsbehälter angeschlossen sind, können die verschiedenen Düsen zum einen in verschiedene Positionen für verschiedene Applikationen angebracht sein, zum anderen besteht nicht die Notwendigkeit, nach einer oder mehreren Anwendungen die Düse bzw. die Leitung zu spülen, sondern ggf. nur periodisch, nach z.B. einem Tag, um so den Verbrauch der Behandlungsmittel zu reduzieren. Erfindungsgemäß ist die Düseneinrichtung der Vorrichtung an der Rückseite eines Kraftfuttertroges bzw. einer Schüssel angeordnet. Das heißt, in dem Moment, wo z.B. ein Rind an einen Kraftfuttertrog herantritt und von der Vorrichtung erkannt wird, wird dem Rind beim Fressen das Behandlungsmittel auf die Nase direkt verabreicht, so dass das/die Behandlungsmittel behandlungsspezifisch verabreicht werden kann/können.

In einer Weiterbildung der Vorrichtung ist eine Einrichtung vorgesehen, um die Flüssigkeitsbehälter mit Druck zu beaufschlagen, um das/die Behandlungsmittel aus der Düseneinrichtung ohne Anwendung einer Pumpe herauszusprühen. Eine solche Auslegung bedarf im Regelfall ein Ventil, insbesondere ein ansteuerbares Ventil, das zwischen dem Vorratsbehälter und einer Öffnung der entsprechenden Düse angeordnet ist. Eine solche Einrichtung, die mit einem ansteuerbaren Ventil kooperiert, ermöglicht es, Behandlungsmittel je nach Öffnungszeit und/oder Größe des Ventils dosiert zu verabreichen. Dies bedeutet, dass das gleiche Behandlungsmittel bei verschiedenen Tieren in verschiedenen Dosierungen verabreicht werden kann, z.B. erhalten dann junge Tiere weniger Behandlungsmittel als ältere Tiere oder umgekehrt. Solch ein geschlossenes System zwischen Ventil und Flüssigkeitsbehälter verlängert auch die Haltbarkeit und Reinigungsverluste des Behandlungsmittels, was zu geringeren Verbrauchskosten führt.

Vorteilhafterweise kann eine erfindungsgemäße Vorrichtung eine bzw. mehrere Pumpen vorsehen, die durch eine Verdrängungspumpe gebildet sind, insbesondere durch eine ansteuerbare Verdrängungspumpe. Solche können z.B. von einem Schrittmotor angetrieben werden, so dass schrittweise verschiedene Dosierungen von Behandlungsmitteln dem Tier zugeführt werden können. Solch eine Anordnung benötigt dann auch kein Ventil, was geöffnet oder angesteuert werden muss, da die Verdrängungspumpe, die durch den Schrittmotor gesteuert wird, selbst als Ventil funktioniert und so das/die Behandlungsmittel abgeben kann.

Des Weiteren kann beispielsweise durch eine zusätzliche Infrarotsteuerung mittels eines Infrarotsensors die Position des Nasenspiegels eines Rindes erkannt werden, um eine exakte Dosierung an eben diesem zu ermöglichen. Hierzu kann die Düseneinrichtung beweglich angeordnet sein, um in ihrer Höhe bzw. Entfernung von dem Tier automatisch anhand der durch den Infrarotsensor erkannten Position eingestellt zu werden, um die bestmögliche Applikation der Behandlungsmittel zu gewährleisten.

Erfindungsgemäß ist eine Eingabemöglichkeit in der Vorrichtung vorgesehen, beispielsweise in Form einer Tastatur, eines EDV-Systems oder eines Touchscreens, über die Informationen über die jeweiligen Tiere und das zu verabreichende Behandlungsmittel und eine Behandlungsmenge des Behandlungsmittels eingebbar ist. Hierbei können dann nach erfolgreicher Untersuchung des Tieres durch den Bauern, eines Tierarztes oder eines Naturheilpraktikers Informationen über das Tier an die Vorrichtung weitergegeben werden, z.B. dass gewisse Rinder mit gewissen homöopathischen Mitteln behandelt werden sollten, um den Milchfluss oder ähnliches zu verbessern.

Erfindungsgemäß ist die Steuerung durch einen Rechner, durch einen Mikroprozessor mit Datenspeicher bzw. Programmspeicher oder einen SPS-Baustein gebildet. Das heißt, die Steuerung ist mit einer Datenbank so verbunden, dass nach Erkennen des Tieres die tierspezifische Behandlungsmethode mit Behandlungsmitteln erkannt werden kann, so dass sichergestellt wird, dass für jedes Tier das jeweilig vorgesehene Behandlungsschema angewandt wird.

Die Erfindung wird nachfolgend anhand der Zeichnungen näher erläutert. In diesen zeigen:
- Fig. 1: eine schematische Zeichnung eines landwirtschaftlichen Tierbetriebs mit erfindungsgemäßer Vorrichtung;
- Fig. 2: einen Futtertrog mit automatischem Sprühsystem gemäß der vorliegenden Erfindung;
- Fig. 3: eine erste Ausführungsform der Vorrichtung der vorliegenden Erfindung;
- Fig. 4A: eine weitere Ausführungsform der vorliegenden Erfindung;
- Fig. 4B: eine Seitenansicht der Fig. 4A;
- Fig. 5: einen schematischen Aufbau der Steuerung der erfindungsgemäßen Vorrichtung;
- Fig. 6: eine schematische Ansicht von Komponenten der Düseneinrichtung der vorliegenden Erfindung;
- Fig. 7: eine weitere schematische Ansicht von Komponenten einer weiteren Düseneinrichtung der vorliegenden Erfindung; und
- Fig. 8: eine weitere schematische Ansicht von Komponenten einer weiteren Düseneinrichtung der vorliegenden Erfindung.

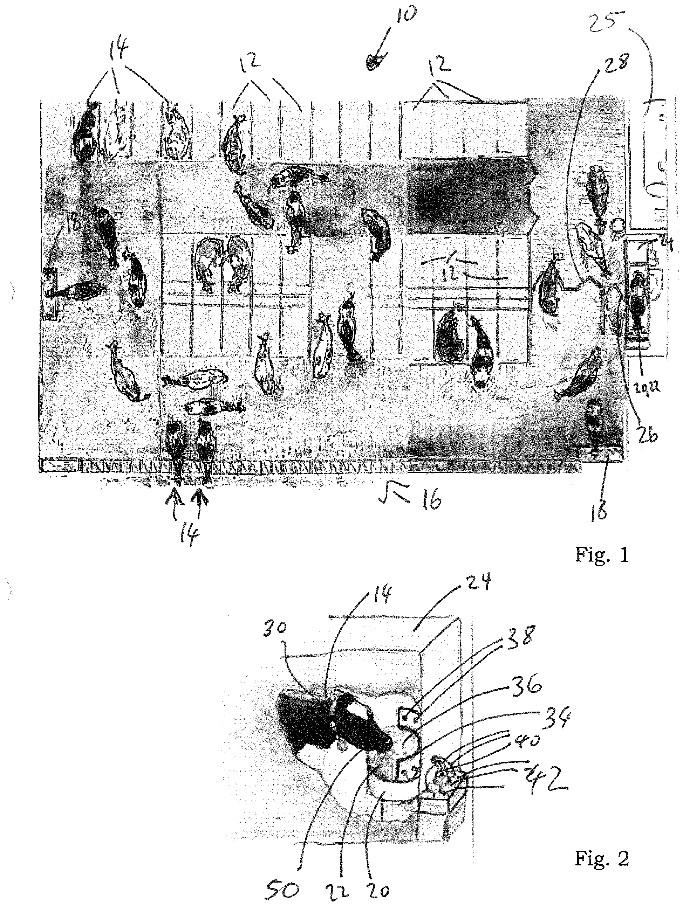

Fig. 1 zeigt einen landwirtschaftlichen Betrieb 10 am Beispiel einer Rinderhaltung. In dieser sind mehrere Rinderschlafplätze 12 gezeigt, wo Rinder 14 in Ruhephasen schlafen können. Des Weiteren ist ein Futtertisch 16 zu erkennen, an der gerade zwei Rinder 14 fressen. Um die Flüssigkeitsaufnahme der Rinder 14 zu gewährleisten, sind auch Wassertränken 18 vorgesehen. An einem Ende des landwirtschaftlichen Betriebs 10 ist ein Futtertrog 20 mit Kraftfutter 22 in einer Abgabestation/Melkroboter 24 vorgesehen, in der jeweils immer nur ein Rind 14 mit Kraftfutter 22 gefüttert werden kann (siehe auch Fig. 2). Um in diese Abgabestation 24 zu gelangen, muss ein Rind 14 eine Absperrung 26 passieren. In dieser Absperrung 26 ist ein Transponderlesemittel 28 integriert, welches erkennt, ob ein Rind 14 an den Futtertrog 20 gelangen darf.

Anstelle einer getrennten Futterabgabestation 24 vorzusehen, könnte die erfindungsgemäße Einrichtung mit einer Melkstation 25 kombiniert werden, die ggf. auch eine Futterabgabemöglichkeit beinhalten kann.

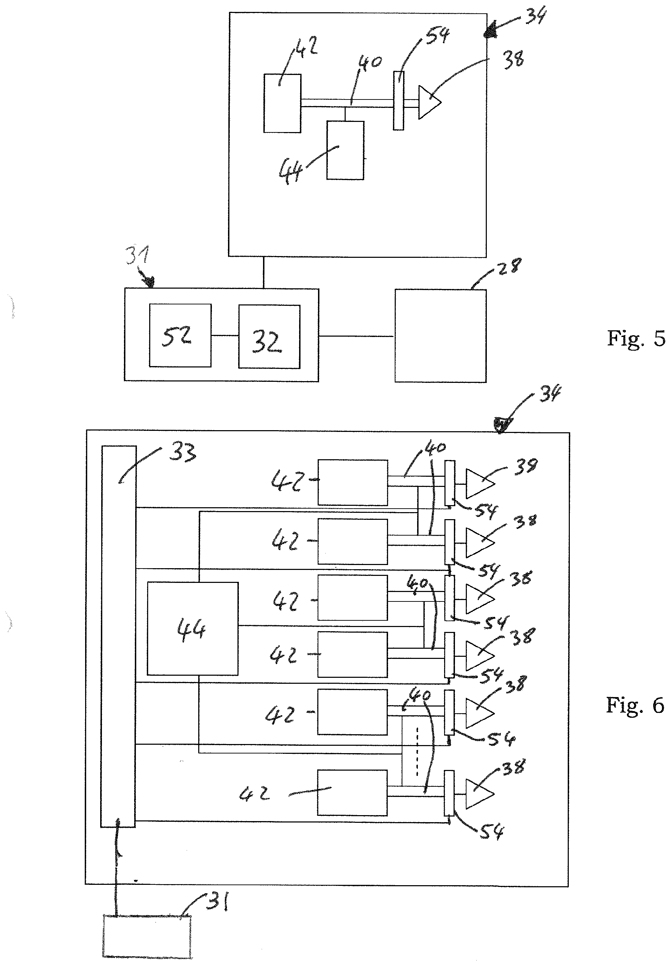

Tieren 14 werden Transponder 30 (siehe Fig. 2) oder ähnliche Erkennungseinheiten implantiert bzw. angeheftet, eine Steuerung 31 (siehe Fig. 5) erkennt mittels des Transponderlesemittels 28 welches Tier 14 an der Absperrung 26 steht und in die Abgabestation 24 gelangen will. Die Steuerung 31 entscheidet, ob das Tier 14 gefüttert bzw. behandelt werden darf. Sollte das Tier 14 schon gefressen bzw. Behandlungsmittel 36 verabreicht bekommen haben, öffnet die Absperrung 26 nicht. Die Absperrung 26 kann in der Form eines beweglichen Zaunelements oder Tores ausgebildet werden.

Bei Erkennung eines Rindes 14, welches noch kein Kraftfutter 22 zu sich genommen bzw. Behandlungsmittel 36 verabreicht bekommen hat, wird die Absperrung 26 geöffnet, so dass das Rind 14 in die Abgabestation 24 eintreten kann. Diese Transponder 30 sind mittels der Steuerung 31 mit einer Datenbank 32 (siehe auch Fig. 5) vernetzt, die die Kennzeichnung, das Alter sowie einen Diätplan für das Tier 14 beinhaltet. Je nach Tier 14 wird dann eine gewisse Menge an Kraftfutter 22 an einen Futtertrog 20 (siehe Fig. 2) abgegeben.

Wenn ein Rind 14 in die Kraftfutterabgabestation 24 gemäß Fig. 1 eingetreten ist, wird dieses an den Futtertrog 20 herantreten und das für das Tier 14 bereitgelegte Kraftfutter 22 fressen. Fig. 2 zeigt in einer schematischen Ansicht ein Rind 14, welches an einem Futtertrog 20 mit automatischem Sprühsystem 34 frisst. Das Sprühsystem ist mit der gleichen Datenbank 32 gekoppelt wie die, die die Kennzeichnung des Tieres 14 beinhaltet, nur dass diese Datenbank 32 um den Parameter Behandlungsmittel 36 und Behandlungsmethode erweitert ist. Natürlich kann auch eine zweite autarke Datenbank vorgesehen sein, die von der ersten Datenbank 32 entkoppelt ist.

Die Steuerung 31 erkennt ein Tier 14 beim Eintreten in die Kraftfutterstation 22 mittels des Transponders 30 und stellt nun mittels einer Düse 38 einer Düseneinrichtung 34 automatisch ein tierspezifisches Behandlungsmittel 36 oder mehrere Behandlungsmittel 36 bereit, die gemäß der Behandlungsmethode auf die Nase an ein jeweiliges Tier 14 über die Futterstation 22 abgegeben werden.

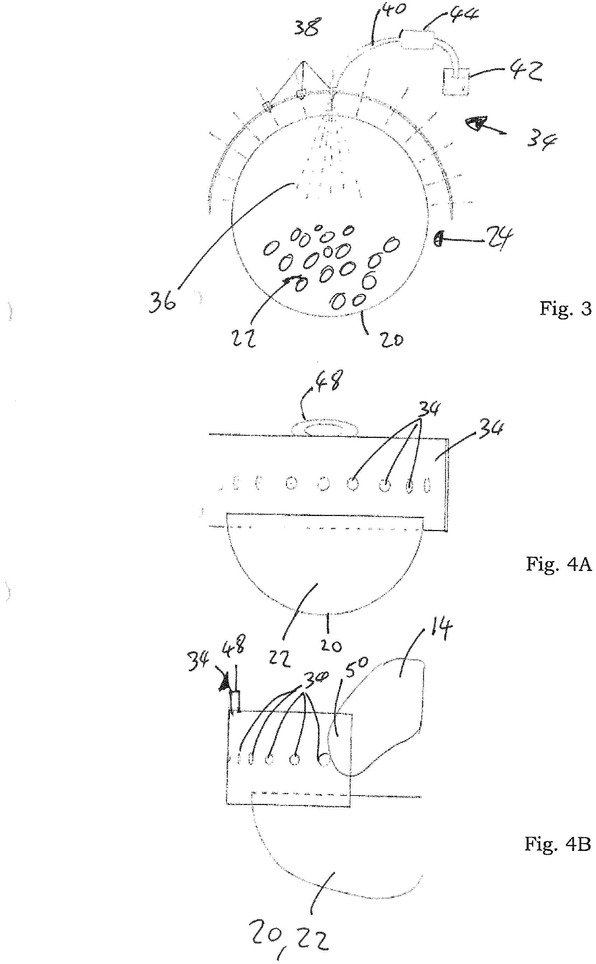

Fig. 3 zeigt eine schematische Perspektivansicht einer Kraftfutterabgabestation 24 mit einem Futtertrog 20 und einer Düseneinrichtung 34. Die Düseneinrichtung 34 ist mittels mehrerer Leitungen 40 an Vorratsbehälter 42 angeschlossen, um die darin befindlichen Behandlungsmittel 36 mittels einer Pumpe 44 über die Düseneinrichtung 34 an ein Tier 14 abzugeben. Die Kraftfutterstation 24 weist einen Futtertrog 20 auf, aus dem ein Tier 14, z.B. ein Rind, ein Schwein, ein Schaf oder ein Huhn, Kraftfutter 22 aufnimmt und während des Fressens mit Behandlungsmittel 36 angesprüht wird. Typischerweise sind solche Kraftfutterstationen 24 in landwirtschaftlichen Betrieben 10 eingebaut (siehe hierzu Fig. 1 und 2). Die Düseneinrichtung 34 der Vorrichtung gemäß Fig. 3 weist mehrere Sprühdüsen 34 auf, die halbkreisförmig um den Futtertrog 20 angeordnet sind. Die Düseneinrichtung 34 kann je nach Anwendungsbereich aufgebaut sein und deshalb in seiner Konstruktion von dieser Halbkreisform abweichen.

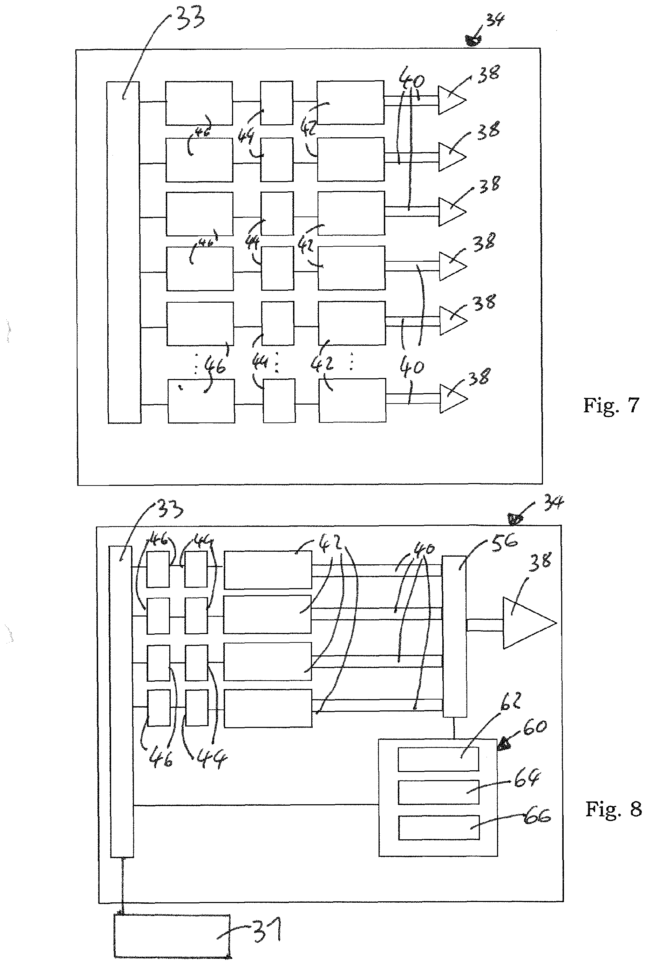

Die Sprühdüsen 34 sind mit jeweiligen Leitungen 40 über die Pumpe 44 an die Vorratsbehälter 42 angeschlossen. Die Pumpe 44 kann z.B. eine Verdrängungspumpe sein, die mit einem Schrittmotor 46 (siehe Fig. 7) gekoppelt ist, um schrittweise verschiedene Mengen verschiedener Behandlungsmittel 36 abzugeben. Die Dosis an Behandlungsmittel 36, die abgegeben werden kann, wird dann durch die Anzahl der befohlenen Schritte des Motors 46 bestimmt.

Fig. 4A zeigt eine weitere Ausführungsform der Vorrichtung, jedoch ist in diesem Beispiel die automatische Erkennungseinheit nicht durch ein Transponderlesemittel 28, sondern mittels einer Kamera 48 gebildet, die über eine Steuervorrichtung 31 (siehe Fig. 5) mit einer automatischen Bilderkennung verbunden ist, um die Tiere 14 anhand von gespeicherten Bildern zu erkennen. Die Kamera 48 könnte auch dazu verwendet werden, um die Größe des Tieres 14 bzw. den Abstand des Tieres 14 zur Düseneinrichtung 34 zu bestimmen, um diese dann so zu positionieren, dass die für das Tier 14 bereitgestellte Behandlungsmethode optimal angewandt werden kann. Die Kamera 48 der Fig. 4A könnte auch zusätzlich zu den Transponderlesemitteln 28 vorgesehen sein und eine Wärmebildkamera sein, die die Temperatur des Tieres 14 messen kann, um bei Erkennung einer erhöhten bzw. zu niedrigen Temperatur dem Landwirt (nicht gezeigt) zu erkennen zu geben, dass das Tier 14 gegebenenfalls eine medizinische Unterstützung braucht.

Fig. 4B zeigt eine Seitenansicht des Futtertroges 20 gemäß Fig. 4A. Hier ist deutlich zu erkennen, dass sich die Düseneinrichtung 34 halbkreisförmig um den Futtertrog 20 erstreckt, um z.B. so die Behandlungsmittel 36 direkt auf den Nasenspiegel 50 eines Rindes 14 zu sprühen.

Fig. 5 zeigt schematisch eine Skizze einer Steuervorrichtung 31 der vorliegenden Erfindung. Diese besteht aus einem handelsüblichen Computer 52, welcher mit der Pumpe 44 der Vorrichtung z.B. gemäß Fig. 2 verbunden ist und auch mit der Sensoreinrichtung 28 verbunden ist, um bei Erkennen eines Tieres 14 die für das Tier 14 erforderlichen Behandlungsmittel 36 durch eine Software auszuwählen. Die Verbindung des Computers 52 mit den verschiedenen möglichen einzelnen Komponenten, z.B. Abgabestation 24, Absperrung 26, Transponderlesemittel 28, Düseneinrichtung 34, Düse 38, Pumpe 44, Schrittmotor 46 etc., kann entweder durch eine Kabelverbindung oder eine Funkverbindung, z.B. W-Lan, Bluetooth Infrarot etc. realisiert werden. Anschließend wird das bzw. die benötigten Behandlungsmittel 36 an das Tier 14 mittels der Düseneinrichtung ausgegeben.

Die Steuervorrichtung 31 ist mit einer Datenbank 32 verbunden, die für jedes Tier 14 eines landwirtschaftlichen Betriebes 10 verschiedene Parameter beinhaltet, wie z.B. Transpondernummer, Name bzw. Kennzeichnung, männlich bzw. weiblich, Alter, Diätplan - d.h. welches Kraftfutter das Tier verabreicht bekommen soll, Behandlungsplan - d.h. welche(s) Behandlungsmittel wie angewendet werden soll - etc.

Fig. 6 zeigt eine schematische Ansicht von Komponenten der Düseneinrichtung 34 der vorliegenden Erfindung. Diese enthält eine Vielzahl an Düsen 38, die mittels Leitungen 40 an Vorratsbehälter 42 angeschlossen sind. Die Leitungen 40 sind mittels der Pumpe 44 mit Druck beaufschlagt, so dass beim Ansteuern der ansteuerbaren Ventile 54, die im Bereich der Düsen 38 vorgesehen sind, Behandlungsmittel 36 dosiert abgegeben werden können. Die ansteuerbaren Ventile 54 werden mittels einer Schnittstelle 33 von der Steuervorrichtung 31 angesteuert.

Fig. 7 zeigt eine weitere schematische Ansicht von Komponenten einer weiteren Düseneinrichtung 34 der vorliegenden Erfindung. In dieser sind keine Ventile 54 angebracht, aber die Pumpe 44 ist eine Verdrängungspumpe die mit einem Schrittmotor 46 gekoppelt ist, um Schrittweise - Dosisweise - Behandlungsmittel 36 über die Düse 38 an Tiere 14 auszugeben. Dabei können die Verdrängungspumpen mit Vorteil unmittelbar benachbart zu den Düsen angeordnet werden, um Behandlungsmittelverluste zu minimieren.

Fig. 8 zeigt eine schematische Ansicht von Komponenten einer weiteren Düseneinrichtung 34 der vorliegenden Erfindung. Diese beinhaltet nur eine Düse 38, die mittels eines Verteilers 56 und mehreren Leitungen 40 an eine Vielzahl von Vorratsbehältern 42 angeschlossen ist. Zusätzlich zu den Versorgungsleitungen 40 ist auch eine Reinigungsleitung (nicht gezeigt) einer Reinigungseinrichtung 60 vorgesehen, die nach dem Ausgeben von Behandlungsmitteln 36 zumindest die Düse 38 reinigen kann. In dem vorliegenden Beispiel ist eine Pumpeneinrichtung 44 mit Schrittmotor 46 gemäß Fig. 7 vorgesehen. Es könnte auch ein Ventil 54 vorgesehen sein, um die Leitungen 40 mit Druck zu beaufschlagen, wie dies bei Fig. 6 vorgesehen ist.

Es ist auch möglich, dass die Reinigungsvorrichtung 60 gemäß Fig. 8 in den Düseneinrichtungen 34 gemäß Fig. 6 und 7 vorgesehen ist. Die Reinigungsvorrichtung 60 besteht aus einer Pumpe 62, einem Reinigungsmittelvorratsbehälter 64, z.B. ein Wasserreservoir, und einem Ventil 66, die an die Steuerung 31 angeschlossen werden können, um mittels dieser z.B. Wasser nach einer Behandlungsmittelabgabe durch den Verteiler 56 und die mindestens eine Düse 38 zu pumpen und zu reinigen.

In einer Ausführungsform der Reinigungsvorrichtung 60, ist der Reinigungsmittelvorratsbehälter 64 mittels Leitungen (nicht gezeigt) an die Ventile 54 der Düseneinrichtung 34 angeschlossen. In diesem Falle sind die Ventile 54 als Drei-Wege-Ventile ausgebildet, mittels derer die Steuerung 31 dann Wahlweise Reinigungsmittel oder Behandlungsmittel an die Düse(n) leiten kann, somit können alle Düsen an einen Reinigungsmittelvorratsbehälter angeschlossen werden.

### Bezugszeichenliste:

- 10: landwirtschaftlicher Betrieb
- 12: Rinderschlafplätze/ Liegeboxen
- 14: Tier
- 16: Futtertisch
- 18: Wassertränke
- 20: Futtertrog
- 22: Kraftfutter
- 24: Abgabestation/Melkroboter
- 25: Melkstation/Milchtank
- 26: Absperrung
- 28: Transponderlesemittel
- 30: Transponder
- 31: Steuerung
- 32: Datenbank
- 33: Schnittstelle
- 34: Sprühsystem/ Düseneinrichtung
- 36: Behandlungsmittel
- 38: Düse
- 40: Leitungsmittel
- 42: Vorratsbehälter
- 44: Pumpe
- 46: Schrittmotor
- 48: Kamera
- 50: Nasenspiegel
- 52: Computer
- 54: Ventil
- 56: Verteiler
- 60: Reinigungsvorrichtung
- 62: Pumpe
- 64: Vorratsbehälter
- 66: Ventil

## Patentansprüche

1. Vorrichtung mit einer Kraftfutterstation (20) zur Abgabe von Kraftfutter an Tiere (14), wie z.B. Rinder oder Schweine und/oder mit einer Melkstation (25), mit einer das jeweilige Tier erkennenden Sensoreinrichtung (28; 48), die über eine Steuervorrichtung (31) die Kraftfutterabgabe tierspezifisch steuert und mit einer Düseneinrichtung, wobei die Sensoreinrichtung (28; 48) einen tierspezifischer Transponder (30) erkennendes System (28), oder ein das Tier erkennende Bildverarbeitungsgerät (48) bzw. Videoerkennungssystem umfasst,
wobei die Düseneinrichtung (34) über Leitungsmittel (40) an Vorratsbehälter (42) angeschlossen oder anschließbar ist, wobei die Düseneinrichtung (34) zur Abgabe von verschiedenen flüssigen Behandlungsmitteln (36) vorgesehen ist, die in den jeweiligen Vorratsbehältern (42) enthalten sind,
wobei eine Steuerung (52) vorgesehen ist, mit der die Sensoreinrichtung (28; 48) oder die Steuervorrichtung (31) kommuniziert, um die Abgabe des jeweiligen Behandlungsmittels (36) tierspezifisch vorzunehmen, **dadurch gekennzeichnet, dass** die Düseneinrichtung (34) dazu ausgebildet ist, das jeweilige Behandlungsmittel (36) auf Nase, Maul und Nase und/oder auf einen Schleimhautbereich des Tieres (14) aufzubringen und/oder zu Verteilen.

2. Vorrichtung nach Anspruch 1,
**dadurch gekennzeichnet, dass**
die Düseneinrichtung (34) mindestens eine Düse (38) umfasst, die von einer Pumpe (44) oder von mehreren Pumpen (44) mit den jeweiligen Behandlungsmitteln (36) speisbar ist, und dass eine Spüleinrichtung (60) vorgesehen ist, um die Düse (38) und gegebenenfalls die sich zwischen der jeweiligen Pumpe (44) und der Düse (38) erstreckende Leitung (40) nach einer Behandlungsmittelabgabe zu reinigen.

3. Vorrichtung nach zumindest einem der vorhergehenden Ansprüche,
**dadurch gekennzeichnet, dass**
die Düseneinrichtung (34) aus mehreren Düsen (38) besteht, die jeweils über eine Leitung (40) und eine Pumpe (44) an einen jeweiligen Flüssigkeitsbehälter (42) angeschlossen bzw. anschließbar ist.

4. Vorrichtung nach einem der vorhergehenden Ansprüche,
**dadurch gekennzeichnet, dass**
die Düseneinrichtung (34) an der Rückseite eines Kraftfuttertroges (22) bzw. einer Schüssel angeordnet ist.

5. Vorrichtung nach zumindest einem der vorhergehenden Ansprüche,
**dadurch gekennzeichnet, dass**
eine Einrichtung vorgesehen ist, um die Flüssigkeitsbehälter mit Druck zu beaufschlagen, um die Behandlungsmittel (36) aus der Düseneinrichtung (34) ohne Anwendung einer Pumpe herauszusprühen und mit einem Ventil (54), insbesondere einem ansteuerbaren Ventil, zwischen dem Vorratsbehälter (42) und einer Öffnung der entsprechenden Düse (38).

6. Vorrichtung nach zumindest einem der vorhergehenden Ansprüche 2, 3 oder 5,
**dadurch gekennzeichnet, dass** die bzw. jede Pumpe (44) durch eine Verdrängungspumpe, insbesondere durch eine ansteuerbare Verdrängungspumpe, gebildet ist.

7. Vorrichtung nach einem der vorhergehenden Ansprüche,
**dadurch gekennzeichnet, dass**
sie in einer freistehenden Kraftfutterstation, in einem automatischen Melksystem bzw. in einem Melkroboter mit eingebauter Kraftfutterabgabestation oder in einer bewegbaren Kraftfutterstation integriert ist.

8. Vorrichtung nach einem der vorhergehenden Ansprüche,
**dadurch gekennzeichnet, dass**
eine Eingabemöglichkeit, beispielsweise in Form einer Tastatur, eines EDV-Systems (52) oder eines Touchscreens, über die Informationen über die jeweiligen Tiere (14) und das zu verabreichende Behandlungsmittel (36) und eine Behandlungsmenge des Behandlungsmittels (36) eingebbar ist.

9. Vorrichtung nach einem der vorhergehenden Ansprüche,
**dadurch gekennzeichnet, dass**
die Steuerung durch einen Rechner, durch einen Mikroprozessor mit Datenspeicher bzw. Programmspeicher oder einen SPS-Baustein gebildet ist.

10. Vorrichtung nach einem der vorhergehenden Ansprüche,
**dadurch gekennzeichnet, dass**
dass die Steuerungsvorrichtung (31) eine Datenbank (32) mit tierspezifischen Erkennungsmerkmalen bzw. tierspezifischen Behandlungspläne umfasst.

## Claims

1. An apparatus having a concentrated feed station (20) for dispensing concentrated feed to animals (14), such as cattle or pigs, and/or having a milking station (25), having a sensor device (28; 48) which recognizes the respective animal and which controls the dispensing of concentrated feed in an animal-specific manner via a control apparatus (31), and having a nozzle device, wherein the sensor device (28; 48) comprises a system (28) which recognizes animal-specific transponders (30) or an image processing device (48) or video recognition system which recognizes the animal;
wherein the nozzle device (34) is connected or connectable via line means (40) to storage containers (42), with the nozzle device (34) being provided to dispense different liquid treatment agents (36) which are contained in the respective storage containers (42); and wherein a control (52) is provided with which the sensor device (28; 48) or the control apparatus (31) communicates to carry out the dispensing of the respective treatment agent (36) in an animal-specific manner, **characterized in that**
the nozzle device (34) is configured to apply and/or to distribute the respective treatment agent (36) onto the nose, onto the mouth and nose and/or onto a mucous membrane region of the animal (14).

2. An apparatus in accordance with claim 1,
**characterized in that**
the nozzle device (34) comprises at least one nozzle (38) which can be fed with the respective treatment agents (36) by one pump (44) or by a plurality of pumps (44); and **in that** a flushing device (60) is provided to clean the nozzle (38) and, if necessary, the line (40) extending between the respective pump (44) and the nozzle (38) after a dispensing of treatment agent.

3. An apparatus in accordance with at least one of the preceding claims,
**characterized in that**
the nozzle device (34) comprises a plurality of nozzles (38), each of which is connected or connectable via a line (40) and a pump (44) to a respective liquid container (42).

4. An apparatus in accordance with any one of the preceding claims,
**characterized in that**
the nozzle device (34) is arranged at the rear side of a concentrated feed trough (22) or of a bowl.

5. An apparatus in accordance with at least one of the preceding claims,
**characterized in that**
a device is provided to apply pressure to the liquid containers in order to spray the treatment agents (36) out of the nozzle device (34) without using a pump and with a valve (54), in particular a controllable valve, between the storage container (42) and an opening of the corresponding nozzle (38).

6. An apparatus in accordance with at least one of the preceding claims 2, 3 or 5,
**characterized in that**
the or each pump (44) is formed by a displacement pump, in particular by a controllable displacement pump.

7. An apparatus in accordance with any one of the preceding claims,
**characterized in that**
it is integrated in a free-standing concentrated feed station, in an automatic milking system or in a milking robot having an installed concentrated feed dispensing station or in a movable concentrated feed station.

8. An apparatus in accordance with any one of the preceding claims,
**characterized in that**
an input option, for example in the form of a keyboard, an IT system (52) or a touch screen, is provided via which information on the respective animals (14), the treatment agent (36) to be administered and a treatment quantity of the treatment agent (36) can be input.

9. An apparatus in accordance with any one of the preceding claims,
**characterized in that**
the control is formed by a computer, by a microprocessor having a data memory or program memory or by a PLC module.

10. An apparatus in accordance with any one of the preceding claims,
**characterized in that**
the control apparatus (31) comprises a database (32) having animal-specific recognition features and/or animal-specific treatment plans.

## Revendications

1. Dispositif comprenant une station de distribution d'aliments concentrés (20) pour distribuer des aliments concentrés à des animaux (14), tels que des vaches ou des porcs, et/ou une station de traite (25), un moyen de détection (28 ; 48) qui reconnaît l'animal respectif et qui commande la distribution des aliments concentrés de manière spécifique à l'animal par l'intermédiaire d'un dispositif de commande (31), et un système à buse,
dans lequel
le moyen de détection (28 ; 48) comprend un système (28) qui reconnaît un transpondeur (30) spécifique à l'animal, ou un appareil de traitement d'image (48) ou un système de reconnaissance vidéo qui reconnaît l'animal, le système à buse (34) est relié ou peut être relié à des récipients de stockage (42) par des moyens de conduite (40), le système à buse (34) étant prévu pour distribuer différents agents de traitement liquides (36) contenus dans les récipients de stockage respectifs (42),
il est prévu un système de commande (52) avec lequel le moyen de détection (28 ; 48) ou le dispositif de commande (31) communique afin d'effectuer la distribution de l'agent de traitement respectif (36) de manière spécifique à l'animal,
**caractérisé en ce que**
le système à buse (34) est réalisé pour appliquer et/ou répartir l'agent de traitement respectif (36) sur le nez, sur la bouche et le nez et/ou sur une zone de muqueuse de l'animal (14).

2. Dispositif selon la revendication 1,
**caractérisé en ce que**
le système à buse (34) comprend au moins une buse (38) qui peut être alimentée avec les agents de traitement respectifs (36) par une pompe (44) ou par plusieurs pompes (44), et **en ce que**
il est prévu un dispositif de rinçage (60) pour nettoyer la buse (38) et, le cas échéant, la conduite (40) s'étendant entre la pompe respective (44) et la buse (38), après la distribution d'un agent de traitement.

3. Dispositif selon l'une au moins des revendications précédentes,
**caractérisé en ce que**
le système à buse (34) est constitué de plusieurs buses (38), chacune d'entre elles étant reliée ou pouvant être reliée à un récipient de liquide respectif (42) par une conduite (40) et par une pompe (44).

4. Dispositif selon l'une des revendications précédentes,
**caractérisé en ce que**
le système à buse (34) est situé sur le côté arrière d'une auge d'aliments concentrés (22) ou d'une écuelle.

5. Dispositif selon l'une au moins des revendications précédentes,
**caractérisé en ce que**
il est prévu un moyen pour la mise sous pression des récipients de liquide afin de pulvériser les agents de traitement (36) hors du système à buse (34) sans utiliser de pompe, comportant une vanne (54), en particulier une vanne pilotable, entre le récipient de stockage (42) et une ouverture de la buse correspondante (38).

6. Dispositif selon l'une au moins des revendications précédentes 2, 3 ou 5,
**caractérisé en ce que**
la ou chaque pompe (44) est formée par une pompe volumétrique, en particulier par une pompe volumétrique pilotable.

7. Dispositif selon l'une des revendications précédentes,
**caractérisé en ce que**
il est intégré dans une station d'aliments concentrés autonome, dans un système de traite automatique ou dans un robot de traite ayant une station de distribution d'aliments concentrés intégrée, ou dans une station d'aliments concentrés mobile.

8. Dispositif selon l'une des revendications précédentes,
**caractérisé en ce que**
il est prévu une possibilité de saisie, par exemple sous la forme d'un clavier, d'un système informatique (52) ou d'un écran tactile, permettant de saisir des informations sur les animaux respectifs (14) et sur l'agent de traitement à administrer (36) ainsi que sur une quantité de traitement de l'agent de traitement (36).

9. Dispositif selon l'une des revendications précédentes,
**caractérisé en ce que**
le système de commande est constitué par un calculateur, par un microprocesseur ayant une mémoire de données ou une mémoire de programmes, ou par un module API.

10. Dispositif selon l'une des revendications précédentes,
**caractérisé en ce que**
le dispositif de commande (31) comprend une base de données (32) ayant des caractéristiques de reconnaissance spécifiques à l'animal ou des plans de traitement spécifiques à l'animal.
